# EUROPEAN PATENT APPLICATION

(11) **EP 4 613 477 A1**
(43) Date of publication of application: **10.09.2025**
(21) Application number: 23918530.9
(22) Date of filing: 13.11.2023
(51) Int. Cl.: B32B 15/09, B65D 65/42

(54) **RESIN-COATED METAL SHEET, TWO-PIECE CAN, AND METHOD FOR MANUFACTURING RESIN-COATED METAL SHEET**

(30) Priority: 23.01.2023 JP 2023008362
(71) Applicant: JFE Steel Corporation, Tokyo 100-0011 (JP)
(72) Inventor: KAWAI, Yuya, Tokyo 100-0011 (JP); YOSHIDA, Yasuhide, Tokyo 100-0011 (JP)
(74) Representative: Grünecker Patent- und Rechtsanwälte PartG mbB
(86) International application number: PCT/JP2023/040815
(87) International publication number: WO 2024/157575

(57) **Abstract**

Provided is a resin-coated metal sheet having a smooth and aesthetic appearance by preventing appearance defects (surface roughening) that occur in a resin coating layer during heat treatment after can-making processing and preventing a decrease in smoothness of the surface of the resin coating layer during coating. A resin-coated metal sheet 1 comprises: a metal sheet 2; and a resin coating layer 3 or 4 located on at least one side of the metal sheet and containing 90 mass% or more of polyester resin relative to total resin. The resin coating layer has a crystalline content of 15 % or less. A maximum value Sa_{MAX} of an arithmetic mean height Sa of a surface of the resin coating layer is 0.30 µm or less. A difference ΔSa between the maximum value Sa_{MAX} and a minimum value Sa_{MIN} of the arithmetic mean height Sa is 0.15 µm or less.

## Description

### TECHNICAL FIELD

The present disclosure relates to a resin-coated metal sheet including a resin coating layer, a two-piece can, and a production method for a resin-coated metal sheet.

### BACKGROUND

Painted metal sheets have been conventionally used that are obtained by painting metal sheets, such as tin-free steel (TFS) or aluminum, used as material for metal containers to improve corrosion resistance. The production of painted metal sheets, however, has problems in that the painting and baking process is complex and thus is low in productivity and time-consuming, and also emits a large amount of solvent and carbon dioxide, causing a high environmental burden.

To solve these problems, resin-coated metal sheets have been developed as material to replace painted metal sheets. A resin-coated metal sheet is obtained by providing a thermoplastic resin film on the surface of a heated metal sheet. Currently, resin-coated metal sheets are widely used industrially, mainly for beverage cans, food cans, etc.

Typically, metal containers are broadly divided into two-piece cans and three-piece cans. A two-piece can is a metal container composed of two parts: a can body integrated with a can bottom, and a lid. A three-piece can is a metal container composed of three parts: a can body, a top lid, and a bottom lid. Two-piece cans have an aesthetic appearance because they do not have weld portions. Meanwhile, a large amount of deformation is typically required of metal sheets used as material for two-piece cans. In addition, due to the increase in the amount of deformation associated with the development of can-making processing technology, a new problem has arisen in that, during heat treatment after can-making processing on resin-coated metal sheets for two-piece cans, appearance defects (surface roughening) may occur in the resin coating layer.

For two-piece cans, techniques of producing can bodies using resin-coated metal sheets as material by drawing, drawing and ironing (DI), or the like have been proposed (Patent Literatures (PTLs) 1 and 2). Moreover, a technique of controlling the crystalline content in the resin coating layer has been proposed in order to prevent surface roughening that occurs in the resin coating layer during heat treatment after can-making processing (PTL 3).

### CITATION LIST

### Patent Literature

PTL 1: JP H04-091825 A
PTL 2: JP 2004-148324 A
PTL 3: WO 2013/030972 A1

### SUMMARY

### (Technical Problem)

The techniques described in PTLs 1 and 2 are basic techniques for the production of two-piece cans. Due to the increase in the amount of deformation associated with the development of can-making processing technology, however, new problems have arisen such as surface roughening of the resin coating layer during heat treatment after can-making processing. This has made it more important to control the performance of resin-coated metal sheets used in the production of two-piece cans.

The technique described in PTL 3 can prevent surface roughening of the resin coating layer during heat treatment after can-making processing. There is, however, room for improvement given the possibility that the smoothness of the surface of the resin coating layer decreases as a result of the resin coating layer, which has reached high temperature up to its surface, being pressed by a lamination roll during coating.

It could therefore be helpful to prevent appearance defects (surface roughening) that occur in a resin coating layer of a resin-coated metal sheet during heat treatment after can-making processing and prevent a decrease in smoothness of the surface of the resin coating layer during coating, and thereby provide a resin-coated metal sheet that has a smooth and aesthetic appearance and excellent formability and adhesion of the resin coating layer after processing.

### (Solution to Problem)

Surface roughening of the resin coating layer occurs as a result of the resin coating layer, which has reached high temperature up to its surface, being pressed by a lamination roll. Upon careful examination, we discovered the following. By performing a two-stage treatment in which a thermoplastic resin film is pressure-bonded to a metal sheet at low temperature and then subjected to very short heat treatment at a temperature higher than the melting point of the resin coating layer, it is possible to prevent appearance defects (surface roughening) that occur in the resin coating layer during heat treatment after can-making processing. A resin-coated metal sheet that has a smooth and aesthetic appearance on the surface of the resin coating layer can thus be provided.

The present disclosure is based on these discoveries. We thus provide the following.
**[1]** A resin-coated metal sheet comprising: a metal sheet; and a resin coating layer located on at least one side of the metal sheet and containing 90 mass% or more of polyester resin relative to total resin, wherein the resin coating layer has a crystalline content of 15 % or less, a maximum value Sa_{MAX} of an arithmetic mean height Sa of a surface of the resin coating layer is 0.30 µm or less, and a difference ΔSa between the maximum value Sa_{MAX} and a minimum value Sa_{MIN} of the arithmetic mean height Sa of the surface of the resin coating layer is 0.15 µm or less.
[2] The resin-coated metal sheet according to [1], wherein the resin coating layer is located on both front and back sides of the metal sheet, and a difference in melting point between the resin coating layer on the front side and the resin coating layer on the back side is 25 °C or less.
[3] The resin-coated metal sheet according to [1] or [2], wherein the resin coating layer on at least one side contains 0.010 mass% or more and 1.0 mass% or less of wax.
[4] A two-piece can produced using the resin-coated metal sheet according to any one of [1] to [3].
[5] The two-piece can according to [4], wherein the resin coating layer is located on an outer surface side of the two-piece can.
**[6]** A production method for a resin-coated metal sheet, the production method comprising: pressure-bonding a thermoplastic resin film containing a thermoplastic resin to at least one side of a metal sheet heated to 40 °C or less below a melting point of the thermoplastic resin film and 5 °C or less above the melting point of the thermoplastic resin film, and thereafter performing cooling to obtain a pre-heat-treatment resin-coated metal sheet; and heating the pre-heat-treatment resin-coated metal sheet to a heat treatment temperature of 5 °C or more above the melting point of the thermoplastic resin film and 30 °C or less above the melting point of the thermoplastic resin film for 0.5 seconds or more and 1.5 seconds or less, holding the pre-heat-treatment resin-coated metal sheet at the heat treatment temperature for 0.5 seconds or more and 1.5 seconds or less, and thereafter cooling the pre-heat-treatment resin-coated metal sheet to obtain the resin-coated metal sheet.

### (Advantageous Effect)

It is thus possible to prevent appearance defects (surface roughening) that occur in a resin coating layer of a resin-coated metal sheet during heat treatment after can-making processing and prevent a decrease in smoothness of the surface of the resin coating layer during coating, and thereby provide a resin-coated metal sheet that has a smooth and aesthetic appearance and also has formability and adhesion of the resin coating layer after processing.

### BRIEF DESCRIPTION OF THE DRAWINGS

In the accompanying drawings:

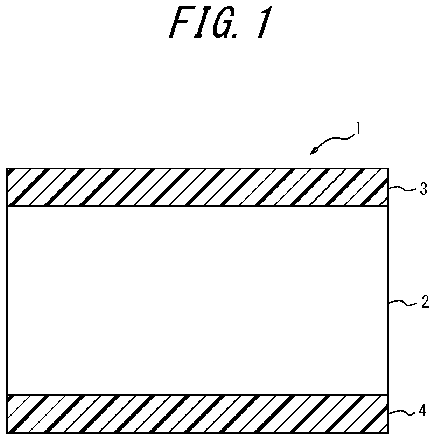

FIG. 1 is a cross-sectional view of an example of a resin-coated metal sheet.

### DETAILED DESCRIPTION

An embodiment of a production method for a resin-coated metal sheet according to the present disclosure will be described below. The embodiment described below is a specific example of the presently disclosed technology, and the present disclosure is not limited to such a specific example.

A resin-coated metal sheet according to the present disclosure is a resin-coated metal sheet comprising: a metal sheet; and a resin coating layer located on at least one side of the metal sheet and containing 90 mass% or more of polyester resin relative to total resin, wherein the resin coating layer has a crystalline content of 15 % or less, a maximum value Sa_{MAX} of an arithmetic mean height Sa of a surface of the resin coating layer is 0.30 µm or less, and a difference ΔSa between the maximum value Sa_{MAX} and a minimum value Sa_{MIN} of the arithmetic mean height Sa of the surface of the resin coating layer is 0.15 µm or less.

According to the present disclosure, it is possible to prevent appearance defects (surface roughening) that occur in a resin coating layer of a resin-coated metal sheet during heat treatment after can-making processing and prevent a decrease in smoothness of the surface of the resin coating layer during coating, and thereby provide a resin-coated metal sheet that has a smooth and aesthetic appearance. It is also possible to reduce residual stress after can-making processing and thereby provide a resin-coated metal sheet that has excellent formability and adhesion of the resin coating layer after processing.

FIG. 1 illustrates an example of a cross section of a resin-coated metal sheet 1 according to one embodiment. The resin-coated metal sheet 1 illustrated in FIG. 1 includes a metal sheet 2, a resin coating layer 3 provided on the front side of the metal sheet 2, and a resin coating layer 4 provided on the back side of the metal sheet 2. The resin coating layer may be provided only on one side of the metal sheet 2. The resin coating layer 3 on the front side of the metal sheet 2 and the resin coating layer 4 on the back side of the metal sheet 2 are located on the outer surface side and inner surface side of a two-piece can after can-making processing, respectively.

### [Metal sheet]

First, the metal sheet will be described. As the metal sheet of the resin-coated metal sheet, for example, a steel sheet or an aluminum sheet widely used as material for cans may be used.

As the metal sheet, tin-free steel (TFS) is particularly suitable from the viewpoint of resin adhesion in a high-temperature and humid environment during retort sterilization or the like. Although the TFS is not limited by the coating weights of the metal chromium layer and the chromium oxide layer, the TFS preferably has, on its surface, a metal chromium layer with a coating weight of 50 mg/m² or more and 200 g/m² or less and, on the metal chromium layer, a chromium oxide layer with a coating weight of 3 mg/m² or more and 30 g/m² or less in terms of metal chromium.

The type of the metal sheet is not limited as long as the metal sheet can be formed into the desired shape, but steel sheets of the following chemical compositions and production methods are preferable.
(1) A steel sheet obtained by subjecting low carbon steel with a C (carbon) content of more than 0.003 mass% and 0.10 mass% or less to recrystallization annealing by continuous annealing.
(2) A steel sheet obtained by subjecting low carbon steel with a C content of more than 0.003 mass% and 0.10 mass% or less to recrystallization annealing and overaging treatment by continuous annealing.
(3) A steel sheet obtained by subjecting low carbon steel with a C content of more than 0.003 mass% and 0.10 mass% or less to recrystallization annealing by box annealing.
(4) A steel sheet obtained by subjecting low carbon steel with a C content of more than 0.003 mass% and 0.10 mass% or less to recrystallization annealing by continuous annealing or box annealing and then to secondary cold rolling (double reduced (DR) rolling).
(5) A steel sheet obtained by subjecting interstitial free (IF) steel made by adding elements that fix solute C, such as Nb and Ti, to ultra low carbon steel with a C content of 0.003 mass% or less, to recrystallization annealing by continuous annealing.

The mechanical properties of the metal sheet are not limited as long as the metal sheet can be formed into the desired shape. To maintain sufficient can body strength without impairing formability, the yield point (YP) of the metal sheet is preferably 220 MPa or more and 580 MPa or less. Moreover, the Lankford value (r-value), which is an index of plastic anisotropy, of the metal sheet is preferably 0.8 or more. Furthermore, the absolute value of the in-plane anisotropy Δr of the r-value of the metal sheet is preferably 0.7 or less.

The chemical composition of the metal sheet is not limited, and a steel sheet containing component elements such as Si, Mn, P, S, Al, and N may be used, for example. The Si content is preferably 0.001 mass% or more. The Si content is preferably 0.1 mass% or less. The Mn content is preferably 0.01 mass% or more. The Mn content is preferably 0.6 mass% or less. The P content is preferably 0.002 mass% or more. The P content is preferably 0.05 mass% or less. The S content is preferably 0.002 mass% or more. The S content is preferably 0.05 mass% or less. The Al content is preferably 0.005 mass% or more. The Al content is preferably 0.100 mass% or less. The N content is preferably 0.0005 mass% or more. The N content is preferably 0.020 mass% or less. The chemical composition may further contain other components such as Ti, Nb, B, Cu, Ni, Cr, Mo, and V, but the total content of these elements is preferably 0.02 mass% or less from the viewpoint of ensuring corrosion resistance, etc.

The sheet thickness of the metal sheet is not limited, and may be, for example, 0.10 mm or more and 0.50 mm or less.

### [Chemical composition of resin coating layer]

The resin-coated metal sheet includes a resin coating layer mainly composed of polyester resin on at least one side of the metal sheet described above. The proportion of polyester resin in the resins constituting the resin coating layer is 90 mass% or more in terms of solid content. If the resin coating layer contains inorganic additives (such as inorganic pigments), the proportion of polyester resin in the resins minus the weight of the inorganic additives is 90 mass% or more.

The polyester resin is a polymer consisting of a dicarboxylic acid unit and a glycol unit.

Examples of dicarboxylic acid units that can be used include units derived from aromatic dicarboxylic acids such as terephthalic acid, isophthalic acid, naphthalenedicarboxylic acid, diphenyldicarboxylic acid, diphenylsulfonedicarboxylic acid, diphenoxyethanedicarboxylic acid, 5-sodiumsulfoisophthalic acid, and phthalic acid; aliphatic dicarboxylic acids such as oxalic acid, succinic acid, adipic acid, sebacic acid, dimer acid, maleic acid, and fumaric acid; alicyclic dicarboxylic acids such as cyclohexanedicarboxylic acid; and oxycarboxylic acids such as p-oxybenzoic acid.

The polyester resin preferably contains 90 mol% or more of terephthalic acid units among dicarboxylic acid units. If the polyester resin contains 90 mol% or more of terephthalic acid units among dicarboxylic acid units, sufficient heat resistance against frictional heat during continuous can-making processing can be ensured, and more stable formability and coatability can be achieved.

Examples of glycol units that can be used include units derived from aliphatic glycols such as ethylene glycol, propanediol, butanediol, pentanediol, hexanediol, and neopentyl glycol; alicyclic glycols such as cyclohexanedimethanol; aromatic glycols such as bisphenol A and bisphenol S; and diethylene glycol.

Two or more of the foregoing dicarboxylic acids may be used in combination and two or more of the foregoing glycols may be used in combination in a range that does not impair heat resistance and formability.

### [Crystalline content in resin coating layer]

The crystalline content in the resin coating layer is 15 % or less. As a result of the crystalline content being 15 % or less, high formability required for forming two-piece cans can be obtained, and appearance defects (surface roughening) that occur in the resin coating layer during heat treatment after can-making processing can be prevented. Moreover, by lowering the crystalline content and reducing the residual stress in the resin coating layer after can-making processing, high adhesion of the resin coating layer after processing can be obtained. The crystalline content in the resin coating layer is preferably 12 % or less and more preferably 10 % or less. If the resin coating layer contains inorganic additives (such as inorganic pigments), the crystalline content in the resin materials minus the mass of the inorganic additives needs to be 15 % or less. Although no lower limit is placed on the crystalline content, the crystalline content may be 1 % or more. The crystalline content is calculated based on the inorganic additive content (the content of inorganic additives) obtained by thermogravimetry and the heat of crystallization and the heat of fusion obtained by differential scanning calorimetry, as described later. Herein, the "inorganic additives" denote inorganic additives among inorganic pigments and additives other than inorganic pigments.

The inorganic additive content is measured as follows. First, the resin-coated metal sheet is immersed in a mixed solution of concentrated hydrochloric acid (12 mol/L):distilled water = 1:1 at room temperature, to dissolve the metal sheet and isolate the resin coating layer. The isolated resin coating layer is thoroughly washed with distilled water and then vacuum dried. Thermogravimetry is performed using a thermogravimeter with a temperature range of room temperature to 800 °C, an air flow rate of 300 mL/min, and a heating rate of 10 °C/min. The proportion of the weight at 800 °C to the weight at room temperature is taken as the inorganic additive content as shown in the following formula (1). Inorganic additive content [%] = weight at 800 °C [mg]/weight at room temperature [mg] × 100

The crystalline content is measured as follows. In the same manner as the measurement of the inorganic additive content, the metal sheet is dissolved from the resin-coated metal sheet to isolate the resin coating layer, and the resin coating layer is dried. The dried resin coating layer is measured from 0 °C to 300 °C at a heating rate of 10 °C/min using a differential scanning calorimeter (DSCQ100) produced by TA Instruments. The heat of crystallization is calculated from the area of the exothermic peak observed from 100 °C to 200 °C, and the heat of fusion is calculated from the area of the endothermic peak measured from 200 °C to 280 °C. The crystalline content is calculated from the calculated heat of crystallization and heat of fusion according to the following formula (2). As the inorganic additive content, the value determined by the foregoing method is used. Crystalline content [%] = (heat of fusion [J/g] - heat of crystallization [J/g]) × 100/(100 - inorganic additive content [%])/140.2 [J/g] × 100

### [Surface smoothness of resin coating layer]

The maximum value Sa_{MAX} of the arithmetic mean height Sa of the surface of the resin coating layer is 0.30 µm or less. If the maximum value Sa_{MAX} of the arithmetic mean height Sa of the surface of the resin coating layer is more than 0.30 µm, the roughness of the surface of the resin coating layer is high, causing a mottled pattern in the case of a colored resin coating layer and a cloudy appearance in the case of a colorless resin coating layer. Although no lower limit is placed on the maximum value Sa_{MAX} of the arithmetic mean height Sa of the surface of the resin coating layer, the maximum value Sa_{MAX} is preferably 0.10 µm or more.

The difference ΔSa between the maximum value Sa_{MAX} and the minimum value Sa_{MIN} of the arithmetic mean height Sa of the surface of the resin coating layer is 0.15 µm or less. If the difference ΔSa between the maximum value Sa_{MAX} and the minimum value Sa_{MIN} of the arithmetic mean height Sa of the surface of the resin coating layer is more than 0.15 µm, the appearance of the product varies depending on the position, and a metal container stably having an aesthetic appearance cannot be obtained. Although no lower limit is placed on the difference ΔSa between the maximum value Sa_{MAX} and the minimum value Sa_{MIN} of the arithmetic mean height Sa of the surface of the resin coating layer, ΔSa is preferably 0.05 µm or more.

The maximum value Sa_{MAX} and the minimum value Sa_{MIN} of the arithmetic mean height Sa of the surface of the resin coating layer are measured by surface roughness analysis using a 3D shape measuring machine. Shape measurement is performed using a one-shot 3D shape measuring machine produced by KEYENCE for an observation field of 1.9 mm × 1.4 mm at a magnification of 160 times, and the arithmetic mean height Sa is calculated by surface roughness analysis. Measurement is performed at five randomly selected locations within the same plane of the resin-coated metal sheet. The maximum value is taken as the maximum value Sa_{MAX} of the arithmetic mean height Sa of the resin-coated metal sheet, the minimum value is taken as the minimum value Sa_{MIN} of the arithmetic mean height Sa of the resin-coated metal sheet, and the difference between Sa_{MAX} and Sa_{MIN} obtained is taken as ΔSa.

The arithmetic mean height Sa is used as an index of surface smoothness in the present disclosure for its high correlation with the product appearance. Arithmetic mean heights include Ra, which is the arithmetic mean height of a line, and Sa, which is the arithmetic mean height of a surface. In the present disclosure, Sa is used as an index of surface smoothness, so that the entire surface can be evaluated without differences in measurement results due to the measurement direction, which occur in the case where Ra is used.

Such crystalline content and surface smoothness of the resin coating layer can be achieved by a two-stage treatment in which the resin coating layer is coated on the metal sheet at low temperature and then subjected to very short heat treatment at a temperature higher than the melting point of the resin coating layer, for example as in the below-described production method.

For the purpose of improving slidability during processing, wax may be added to the resin coating layer. 0.010 mass% or more and 1.0 mass% or less of wax may be added to the resin coating layer. It is particularly preferable to add 0.010 mass% or more and 1.0 mass% or less of wax to the resin coating layer located on the outer surface side of the two-piece can after forming. Adding 0.010 mass% or more of wax to the resin coating layer has the effect of reducing the frictional coefficient of the surface of the resin coating layer during processing and suppressing chipping of the resin coating layer. If the amount of wax added is 1.0 mass% or less, it is easier to form the resin coating layer. The amount of wax added is therefore preferably 1.0 mass% or less.

The wax may be at least one selected from polyolefin-based waxes such as polyethylene and polypropylene waxes and modified products thereof; natural waxes such as carnauba wax; polyamide-based waxes; and polyester-based waxes, or any mixture of these waxes.

Additives such as antioxidants, heat stabilizers, lubrication promoters, crystal nucleating agents, ultraviolet absorbers, and antistatic agents may be optionally added to the resin coating layer within a range that does not impair the effects according to the present disclosure. In addition, coloring pigments may be added to the resin coating layer in order to improve the appearance of the inner and outer surfaces of the metal container.

A white pigment may be added to the resin coating layer. By adding a white pigment to the resin coating layer, the base metal can be concealed and the clarity of printing can be increased, and an especially good appearance can be obtained. Examples of white pigments that can be added include titanium dioxide, alumina, calcium carbonate, barium sulfate, and any mixture thereof. It is preferable to add titanium dioxide as a white pigment because it has a strong coloring power and can ensure a good appearance even after can formation. Among white pigments, white pigments of rutile type with a purity of 90 mass% or more are particularly preferable because they have better dispersibility when mixed with resin materials. In the case of adding titanium dioxide as a white pigment, the addition amount of titanium dioxide is preferably 8 mass% or more and preferably 30 mass% or less relative to the resin coating layer.

In the case of forming the resin coating layer on both sides of the metal sheet, the difference in melting point between the resin coating layers on both sides is preferably 25 °C or lower for production reasons in order to achieve low crystallinity in the resin coating layers on both sides and obtain a good appearance. Details will be given in the description of the production method below.

The thickness of the resin coating layer is not limited, and may be, for example, 6 µm or more and 50 µm or less.

The resin coating layer is not limited to a single-layer structure, and may have a multi-layer structure as long as the requirements stipulated in the present disclosure are satisfied.

The above-described resin-coated metal sheet can be used to produce a two-piece can having a smooth and aesthetic appearance. The two-piece can may be produced by a conventional method. It is preferable that the resin coating layer is located on the outer surface side of the two-piece can.

Next, an example of a production method for a resin-coated metal sheet will be described.

A production method for a resin-coated metal sheet according to the present disclosure comprises: pressure-bonding a thermoplastic resin film containing a thermoplastic resin to at least one side of a metal sheet heated to (the melting point of the thermoplastic resin film - 40 °C) or higher and (the melting point of the thermoplastic resin film + 5 °C) or lower (i.e. 40 °C or less below the melting point of the thermoplastic resin film and 5 °C or less above the melting point of the thermoplastic resin film), and thereafter performing cooling to obtain a pre-heat-treatment resin-coated metal sheet; and heating the pre-heat-treatment resin-coated metal sheet to a heat treatment temperature of (the melting point of the thermoplastic resin film + 5 °C) or higher and (the melting point of the thermoplastic resin film + 30 °C) or lower (i.e. 5 °C or more above the melting point of the thermoplastic resin film and 30 °C or less above the melting point of the thermoplastic resin film) for 0.5 seconds or more and 1.5 seconds or less, holding the pre-heat-treatment resin-coated metal sheet at the heat treatment temperature for 0.5 seconds or more and 1.5 seconds or less, and thereafter cooling the pre-heat-treatment resin-coated metal sheet to obtain the resin-coated metal sheet.

In the production of the resin-coated metal sheet according to the present disclosure, the thermoplastic resin film that is to form the resin coating layer is produced first. The thermoplastic resin film contains a thermoplastic resin. The thermoplastic resin may be a resin containing 90 mass% or more of polyester resin relative to total resin, as described above with regard to the resin coating layer. Additives, etc. are also as described above with regard to the resin coating layer.

The method of producing the thermoplastic resin film is not limited. In one example, the thermoplastic resin film can be produced as follows. First, a thermoplastic resin raw material is optionally heated and vacuum dried, and is then fed into an extruder. The thermoplastic resin is heated and melted in the extruder. The heated and melted thermoplastic resin is extruded through a filter or the like. Foreign matter and modified resin can be removed by the filter. The extruded resin is formed into a sheet and discharged using a T-die, and extruded onto a cooling body such as a cast drum. The extruded sheet is cooled and solidified. A non-stretched thermoplastic resin film can thus be obtained.

It is preferable to stretch the non-stretched film to obtain a stretched film as the thermoplastic resin film forming the resin coating layer, from the viewpoint of reducing the surface roughness of the resin coating layer. The method of obtaining the stretched film is not limited. Examples include a method of stretching in the longitudinal or transverse direction of a film forming machine to obtain a uniaxially stretched film; a method of stretching in the longitudinal or transverse direction and then stretching in the other direction to obtain a sequentially biaxially stretched film; and a method of simultaneously stretching in the longitudinal and transverse directions to obtain a simultaneously biaxially stretched film. In the case of obtaining a sequentially biaxially stretched film, it is preferable to stretch the non-stretched film in the longitudinal direction and then in the transverse direction from the viewpoint of uniform quality and space saving of equipment.

Next, a method of producing the resin-coated metal sheet according to the present disclosure using the foregoing thermoplastic resin film will be described. The resin film is coated on a metal sheet at low temperature, and then subjected to very short heat treatment at a temperature higher than the melting point. A resin-coated metal sheet that achieves both low crystallinity and surface smoothness of the resin coating layer can thus be produced.

The thermoplastic resin film is heated to the melting start temperature or higher and pressure-bonded to the metal sheet by a lamination roll (thermocompression bonding film lamination method). The thermocompression bonding film lamination method is excellent in that it can save production cost and energy.

One way of lowering the crystallinity of the resin coating layer is to melt the resin coating layer by increasing the temperature of the metal sheet when coating the resin coating layer on the metal sheet. With this method, however, it is difficult to obtain a smooth surface. Hence, in the present disclosure, a resin-coated metal sheet is produced by performing a two-stage treatment in which the thermoplastic resin film is coated on the metal sheet at low temperature and then subjected to very short heat treatment at a temperature higher than the melting point.

When pressure-bonding the thermoplastic resin film to the metal sheet, it is necessary to control the pressure bonding conditions to ensure a smooth surface. During lamination, the time during which the resin film is pressure-bonded to the metal sheet by the lamination roll (thermocompression bonding time) is preferably 10 msec or more. The thermocompression bonding time is preferably 40 msec or less. If the thermocompression bonding time is 10 msec or more, the time for the thermoplastic resin film to melt and wet-spread on the surface of the metal sheet can be more effectively secured, with it being possible to achieve better adhesion. If the thermocompression bonding time is 40 msec or less, the lamination roll side of the thermoplastic resin film can be more effectively prevented from softening, with it being possible to achieve better smoothness of the surface of the resin coating layer. The thermocompression bonding time is more preferably 15 msec or more. The thermocompression bonding time is more preferably 30 msec or less.

In order to ensure the smoothness of the surface of the resin coating layer, it is necessary to control the temperature of the metal sheet during pressure bonding and suppress softening of the surface of the resin coating layer during pressure bonding. The temperature of the metal sheet during pressure bonding is (the melting point of the thermoplastic resin film - 40 °C) or higher and (the melting point of the thermoplastic resin film + 5 °C) or lower. If the temperature of the metal sheet during pressure bonding is lower than (the melting point of the thermoplastic resin film - 40 °C), the metal sheet side of the thermoplastic resin film may not melt sufficiently, causing a decrease in the adhesion between the metal sheet and the resin coating layer. If the temperature of the metal sheet during pressure bonding is higher than (the melting point of the thermoplastic resin film + 5 °C), the surface of the thermoplastic resin film on the lamination roll side softens and the smoothness of the surface of the resin coating layer is impaired, which is not preferable. The temperature of the metal sheet is based on the surface temperature of the metal sheet. The melting point of the thermoplastic resin film is the same as the melting point of the resin coating layer formed by pressure-bonding the thermoplastic resin film to the metal sheet.

The temperature of the lamination roll during pressure bonding is not limited, but is preferably 60 °C or higher to ensure the impact resistance of the film after lamination. The temperature of the lamination roll during pressure bonding is preferably 150 °C or lower to prevent the film from adhering to the lamination roll during lamination.

After the thermoplastic resin film is pressure-bonded to the metal sheet, the resin-coated metal sheet is cooled. As the cooling method, water cooling using temperature-controlled water or gas cooling using air, nitrogen, etc. is preferable. From the viewpoint of simplifying equipment, water cooling is more preferable as the cooling method. Examples of the water cooling method include a method of immersing the resin-coated metal sheet in a water tank containing water and a method of spraying water from a nozzle or the like onto the resin-coated metal sheet. The cooling stop temperature is preferably 5 °C or higher. The cooling stop temperature is preferably (the glass-transition temperature of the thermoplastic resin film - 10 °C) or lower. If the cooling stop temperature is (the glass-transition temperature of the thermoplastic resin film - 10 °C) or lower, the fluidity of the amorphous structure inside the resin coating layer can be more effectively suppressed, so that surface roughness caused by the resin-coated metal sheet coming into contact with a roll or the like after cooling can be more effectively prevented. If the cooling stop temperature is 5 °C or higher, condensation on the resin-coated metal sheet and surrounding equipment after cooling can be prevented more effectively.

The resin-coated metal sheet laminated at low temperature as described above has a smooth surface, but has high crystallinity, making it impossible to prevent appearance defects (surface roughening) that occur in the resin coating layer during heat treatment after can-making processing. Moreover, large residual stresses may occur in the resin coating layer during can-making processing, causing a decrease in the adhesion between the resin coating layer and the metal sheet. Accordingly, it is necessary to reduce the crystallinity of the resin coating layer without impairing the smoothness of the surface by subjecting the pre-heat-treatment resin-coated metal sheet that has been pressure-bonded at low temperature to very short heat treatment at a temperature higher than the melting point of the resin coating layer.

The heat treatment is preferably performed by a method of passing the sheet through a heating furnace capable of contactless short heating, such as infrared rays (IR) or induction heating (IH). It is preferable to prevent the resin-coated metal sheet from coming into contact with any of various rolls, etc. from the start of heat treatment to the end of cooling, from the viewpoint of ensuring the smoothness of the surface of the resin coating layer. By preventing the resin-coated metal sheet from coming into contact with any of various rolls, etc. in a high-temperature state, it is possible to more effectively prevent the surface from roughening.

The heat treatment temperature is (the melting point of the thermoplastic resin film + 5 °C) or higher and (the melting point of the thermoplastic resin film + 30 °C) or lower. If the heat treatment temperature is lower than (the melting point of the thermoplastic resin film + 5 °C), the resin coating layer may not melt sufficiently, making it impossible to achieve the desired crystallinity of the resin coating layer. If the heat treatment temperature is higher than (the melting point of the thermoplastic resin film + 30 °C), the resin coating layer may degrade due to heat, which is not preferable. The heat treatment temperature is based on the temperature of the metal sheet.

In the case of forming the resin coating layer on both sides of the metal sheet, the resin coating layer on at least one side satisfies the above heat treatment temperature conditions. In the case of forming the resin coating layer on both sides of the metal sheet, it is preferable that the resin coating layers on both sides satisfy the above heat treatment temperature conditions in order to achieve low crystallinity in the resin coating layers on both sides and obtain a good appearance effectively. Therefore, the difference in melting point between the resin coating layers on both sides is preferably 25 °C or lower. If the difference in melting point between the resin coating layers on both sides is 25 °C or lower, the heat treatment temperature on both sides can be easily limited to the foregoing range of (the melting point of the thermoplastic resin film + 5 °C) or higher and (the melting point of the thermoplastic resin film + 30 °C) or lower.

During the heat treatment, heating is performed so as to reach the heat treatment temperature in a time of 0.5 seconds or more and 1.5 seconds or less. If the heating time is less than 0.5 seconds, temperature control is difficult, and the physical properties of the resin coating layer may vary, such as temperature differences in the transverse direction.

After heating, the resin-coated metal sheet is held at the heat treatment temperature for 0.5 seconds or more and 1.5 seconds or less. If the holding time at the heat treatment temperature is less than 0.5 seconds, the thermoplastic resin film may not melt sufficiently, making it impossible to achieve the desired crystallinity of the resin coating layer.

If the heating time or the holding time at the heat treatment temperature is more than 1.5 seconds, the resin-coated metal sheet needs to be conveyed a very long distance without contacting rolls, etc. This requires huge equipment, and also is likely to cause problems such as sheet vibration. Therefore, each of the heating time and the holding time at the heat treatment temperature is preferably 1.5 seconds or less, and the total of the heating time and the holding time at the heat treatment temperature is preferably 3.0 seconds or less.

After the heat treatment, the resin-coated metal sheet is cooled. As the cooling method, water cooling using temperature-controlled water or gas cooling using air, nitrogen, etc. is preferable. From the viewpoint of simplifying equipment, water cooling is more preferable as the cooling method. Examples of the water cooling method include a method of immersing the resin-coated metal sheet in a water tank containing water and a method of spraying water from a nozzle or the like onto the resin-coated metal sheet. The cooling stop temperature is preferably 5 °C or higher. The cooling stop temperature is preferably (the glass-transition temperature of the thermoplastic resin film - 10 °C) or lower. If the cooling stop temperature is (the glass-transition temperature of the thermoplastic resin film - 10 °C) or lower, the fluidity of the amorphous structure inside the resin coating layer can be more effectively suppressed, so that surface roughness caused by the resin-coated metal sheet coming into contact with a roll or the like after cooling can be more effectively prevented. If the cooling stop temperature is 5 °C or higher, condensation on the resin-coated metal sheet and surrounding equipment after cooling can be prevented more effectively.

The production conditions other than those described above may be in accordance with conventional methods.

### EXAMPLES

A chromium-coated steel sheet (TFS) with a thickness of 0.22 mm, a metal chromium coating weight of 120 mg/m², a chromium oxide coating weight of 10 mg/m² (in terms of metal chromium), and a temper of T3CA was used as a metal sheet. In Examples 1 to 19 and Comparative Examples 1 to 3 and 6 to 7, a thermoplastic resin film was pressure-bonded to the metal sheet by a thermocompression bonding film lamination method under the conditions shown in Table 1 and then subjected to heat treatment under the conditions shown in Table 1 to produce a resin-coated metal sheet. In Comparative Examples 4 to 5, a thermoplastic resin film was pressure-bonded to the metal sheet by a thermocompression bonding film lamination method under the conditions shown in Table 1 to produce a resin-coated metal sheet.

For each of the obtained resin-coated metal sheets, the inorganic additive content, crystalline content, and surface roughness of the resin coating layer were measured by the above-described methods. Moreover, the melting point of the resin coating layer was measured by the below-described method. The measurement results are shown in Table 1. In each example, the resin constituting the resin coating layer had a proportion of polyester resin of 100 mass% to total resin in terms of solid content. The composition of polyester resin in each example is shown in Table 1.

### [Melting point]

The resin-coated metal sheet was immersed in a mixed solution of concentrated hydrochloric acid (12 mol/L):distilled water = 1:1 at room temperature, to dissolve the metal sheet and isolate the resin coating layer. After this, the isolated resin coating layer was thoroughly washed with distilled water and then vacuum dried. The dried resin coating layer was measured from 0 °C to 300 °C at a heating rate of 10 °C/min using a differential scanning calorimeter (DSCQ100) produced by TA Instruments, and the peak temperature of the endothermic peak measured from 200 °C to 280 °C was taken as the melting point of the resin coating layer.

### [Table 1]

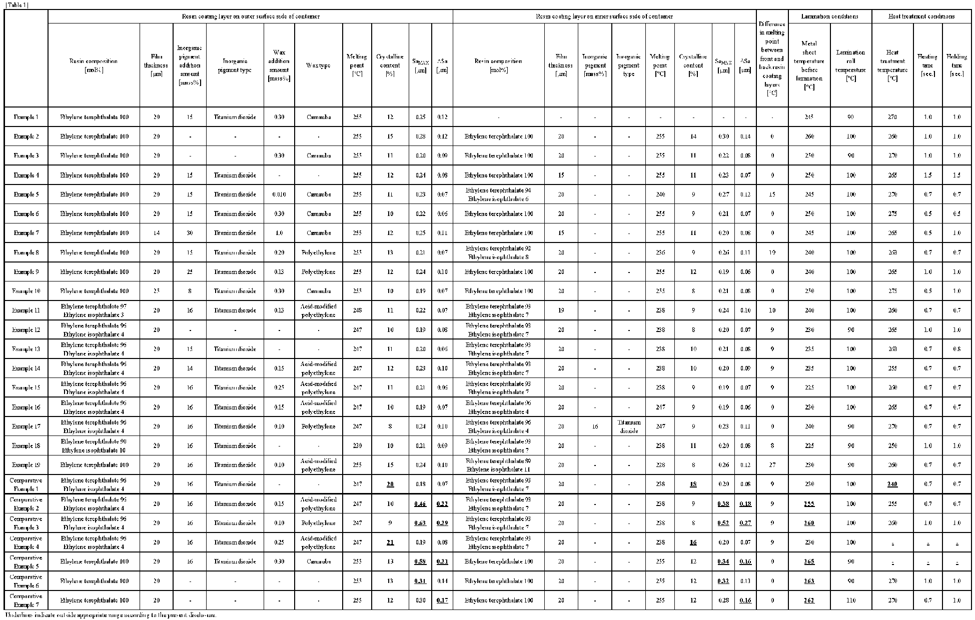

The resin-coated metal sheet of each of Examples 1 to 19 and Comparative Examples 1 to 7 was also evaluated for formability, surface roughening, appearance, and adhesion after processing by the below-described methods. The evaluation results are shown in Table 2.

### [Formability]

Paraffin wax was applied to the resin-coated metal sheet of each of Examples 1 to 19 and Comparative Examples 1 to 7, and then the resin-coated metal sheet was blanked to obtain a disk blank with a diameter of 180 mm. The disk blank was processed by deep drawing using a cupping press machine and then by two-stage redrawing and one-stage ironing to form a can with an inner diameter of 52 mm and a can height of 163 mm. The surface of the resin coating layer on the outer surface side of the can body of the formed can was visually observed to evaluate formability according to the following criteria.

Rating "Ⓞ": No chipping was observed.

Rating "O": Chipping occurred at a height of 5 mm or less from the can flange, with no practical problem.

Rating "×": Chipping occurred at a height of more than 5 mm from the can flange, with practical problem.

### [Surface roughening]

Paraffin wax was applied to the resin-coated metal sheet of each of Examples 1 to 19 and Comparative Examples 1 to 7, and then the resin-coated metal sheet was blanked to obtain a disk blank with a diameter of 180 mm. The disk blank was processed by deep drawing using a cupping press machine and then by two-stage redrawing and one-stage ironing to form a can with an inner diameter of 52 mm and a can height of 163 mm. The formed can was heated using a hot air oven under the conditions that the can body temperature reached (the melting point of the thermoplastic resin film + 5 °C) in 2 minutes, and then rapidly cooled with cold air. The state of the resin coating layer on the outer surface side of the can body after cooling was visually observed to evaluate surface roughening according to the following criteria.

Rating "Ⓞ": No appearance defects such as black spots or wrinkles were observed.

Rating "○": Appearance defects such as black spots or wrinkles occurred at a height position of 5 mm or less from the can flange, with no practical problem.

Rating "△": Appearance defects such as black spots or wrinkles occurred at a height position of more than 5 mm and 20 mm or less from the can flange, with practical problem.

Rating "×": Appearance defects such as black spots or wrinkles occurred at a height position of more than 20 mm from the can flange, with practical problem.

### [Appearance]

The uniformity of the appearance in surface smoothness and transverse direction on both sides of the resin-coated metal sheet of each of Examples 1 to 19 and Comparative Examples 1 to 7 was visually observed to evaluate appearance according to the following criteria.

### Appearance (surface smoothness)

Rating "O": No abnormality in appearance.

Rating "×": Abnormality in appearance such as mottled pattern or cloudy appearance was found.

### Appearance (transverse direction)

Rating "O": Appearance was uniform in the transverse direction.

Rating "×": Appearance varied greatly in the transverse direction.

### [Adhesion after processing]

Paraffin wax was applied to the resin-coated metal sheet of each of Examples 1 to 19 and Comparative Examples 1 to 7, and then the resin-coated metal sheet was blanked to obtain a disk blank with a diameter of 180 mm. The disk blank was processed by deep drawing using a cupping press machine and then by two-stage redrawing and one-stage ironing to form a can with an inner diameter of 52 mm and a can height of 163 mm. A sample (15 mm in width and 120 mm in length) for a peel test was cut out from the body of the formed can so that the can height direction would be the longitudinal direction (test direction). A part of the resin coating layer was peeled off from the end of the cut-out sample on the can body opening side, the peeled resin coating layer was opened in the opposite direction (angle 180 degrees) to the metal sheet from which the resin coating layer was peeled off, and a peel test was performed at a tension rate of 30 mm/min. Adhesion per 15 mm width was evaluated according to the following criteria. The surface subjected to adhesion measurement was the inner surface of the can.
Rating "Ⓞ": 3.0 N/15 mm or more
Rating "○": 2.0 N/15 mm or more and less than 3.0 N/15 mm
Rating "△": 1.0 N/15 mm or more and less than 2.0 N/15 mm 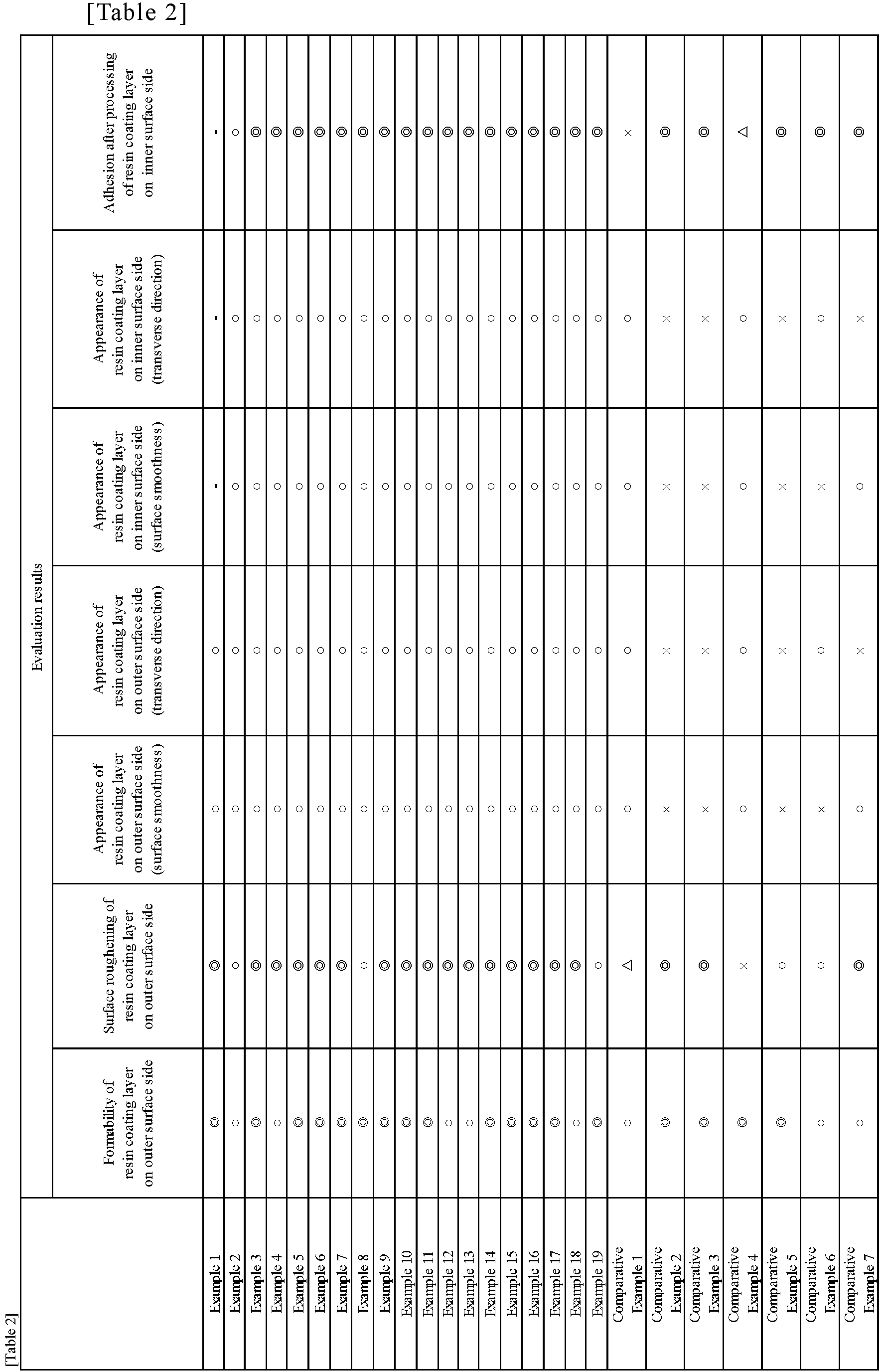
Rating "×": less than 1.0 N/15 mm

As shown in Table 2, in the resin-coated metal sheet of Example 1, the formability, surface roughening, and appearance of the resin coating layer on the outer surface side of the container after forming were good (⊚ or ○). In the resin-coated metal sheets of Examples 2 to 19, the formability, surface roughening, appearance, and adhesion after processing were all good. In Comparative Examples 1 to 7, on the other hand, any of the formability, surface roughening, appearance, and adhesion after processing was evaluated as insufficient (△ or ×).

### INDUSTRIAL APPLICABILITY

It is thus possible to prevent appearance defects (surface roughening) that occur in a resin coating layer of a resin-coated metal sheet during heat treatment after can-making processing and prevent a decrease in smoothness of the surface of the resin coating layer during coating, and thereby provide a resin-coated metal sheet that has a smooth and aesthetic appearance.

### REFERENCE SIGNS LIST

- 1: resin-coated metal sheet
- 2: metal sheet
- 3: resin coating layer
- 4: resin coating layer

## Claims

1. A resin-coated metal sheet comprising:
a metal sheet; and
a resin coating layer located on at least one side of the metal sheet and containing 90 mass% or more of polyester resin relative to total resin,
wherein the resin coating layer has a crystalline content of 15 % or less,
a maximum value Sa_{MAX} of an arithmetic mean height Sa of a surface of the resin coating layer is 0.30 µm or less, and
a difference ΔSa between the maximum value Sa_{MAX} and a minimum value Sa_{MIN} of the arithmetic mean height Sa of the surface of the resin coating layer is 0.15 µm or less.

2. The resin-coated metal sheet according to claim 1,
wherein the resin coating layer is located on both front and back sides of the metal sheet, and
a difference in melting point between the resin coating layer on the front side and the resin coating layer on the back side is 25 °C or less.

3. The resin-coated metal sheet according to claim 1 or 2, wherein the resin coating layer on at least one side contains 0.010 mass% or more and 1.0 mass% or less of wax.

4. A two-piece can produced using the resin-coated metal sheet according to any one of claims 1 to 3.

5. The two-piece can according to claim 4, wherein the resin coating layer is located on an outer surface side of the two-piece can.

6. A production method for a resin-coated metal sheet, the production method comprising:
pressure-bonding a thermoplastic resin film containing a thermoplastic resin to at least one side of a metal sheet heated to 40 °C or less below a melting point of the thermoplastic resin film and 5 °C or less above the melting point of the thermoplastic resin film, and thereafter performing cooling to obtain a pre-heat-treatment resin-coated metal sheet; and
heating the pre-heat-treatment resin-coated metal sheet to a heat treatment temperature of 5 °C or more above the melting point of the thermoplastic resin film and 30 °C or less above the melting point of the thermoplastic resin film for 0.5 seconds or more and 1.5 seconds or less, holding the pre-heat-treatment resin-coated metal sheet at the heat treatment temperature for 0.5 seconds or more and 1.5 seconds or less, and thereafter cooling the pre-heat-treatment resin-coated metal sheet to obtain the resin-coated metal sheet.
